# FASCICULE DE BREVET EUROPEEN

(11) **EP 1 842 375 B1**
(45) Date de publication et mention de la délivrance du brevet: **30.12.2009**
(21) Numéro de dépôt: 06707845.1
(22) Date de dépôt: 26.01.2006
(51) Int. Cl.: H04N 7/173, H04L 12/403

(54) **MÉTHODE DE RÉPARTITION DE LA CHARGE D'UN CENTRE DE GESTION TRANSMETTANT DES INFORMATIONS À UN GRAND NOMBRE D'UNITÉS D'UTILISATEUR**
VERFAHREN ZUM VERTEILEN DER LAST EINER VERWALTUNGSZENTRALE, DIE INFORMATIONEN ZU EINER GROSSEN ANZAHL VON BENUTZEREINHEITEN SENDET
METHOD OF DISTRIBUTING THE LOAD OF A MANAGEMENT CENTRE THAT TRANSMITS INFORMATION TO A LARGE NUMBER OF USER UNITS

(30) Priorité: 27.01.2005 EP 05290201
(43) Date de publication de la demande: 10.10.2007
(73) Titulaire: NAGRA FRANCE SAS, 75015 Paris (FR)
(72) Inventeur: NIMOUR, Abdelkrim, F-92320 Chatillon (FR)
(74) Mandataire: Leman Consulting S.A.
(86) Numéro de dépôt international: PCT/EP2006/050454
(87) Numéro de publication internationale: WO 2006/079640

(56) Documents cités:
- WO-A-2004/100590

## Description

### Domaine de l'invention

La présente invention concerne le domaine de la transmission d'informations numériques entre un centre de gestion et une pluralité d'unités d'utilisateurs connectées audit centre.

### Arrière plan technique

Une telle situation se présente par exemple dans le domaine de la télévision numérique à péage où un grand nombre de décodeurs d'abonnés sont connectés à un centre de gestion. Les informations transmises depuis le centre comprennent principalement des données de mise à jour des droits contenus dans le module de sécurité associé au décodeur. Ces droits achetés par l'utilisateur permettant la décryption de programmes audio/vidéo cryptés doivent être renouvelés fréquemment surtout lors de l'utilisation de la prestation de vidéo à la demande (Video On Demand, VOD). La mise à jour des droits implique une connexion en général de courte durée d'un décodeur au centre de gestion. Lorsque le nombre des décodeurs atteint plusieurs millions et lorsqu'ils tentent de se connecter dans un même intervalle de temps, par exemple à l'échéance d'abonnements, le centre de gestion devient rapidement surchargé.

Dans le domaine des réseaux sans fil par exemple une solution consiste à calculer un temps d'accès à chaque tentative de connexion afin que chaque unité puisse accéder au réseau dans une période donnée. Le document US6490645 décrit une méthode dans laquelle une pluralité d'utilisateurs partagent un accès à une ressource tel qu'un canal de communication. Chaque utilisateur bénéficie d'une priorité et d'une distribution de probabilité non-uniforme correspondant à cette priorité, la somme des distributions de probabilité étant uniforme. Lorsque qu'un utilisateur désire accéder à la ressource, il sélectionne un nombre aléatoire selon sa distribution de probabilité non-uniforme et calcule un temps d'accès basé sur ce nombre aléatoire.

Le document EP1346522 décrit une solution qui consiste à connecter un premier équipement cherchant à établir une connexion avec un second se trouvant dans un état de réception et à alterner les rôles d'émetteur et de récepteur de chaque équipement. Cette alternance est effectuée selon une distribution de probabilité jusqu'à l'expiration d'une période d'essai prédéterminée ou jusqu'à ce que la connexion soit établie entre les deux équipements. La longueur de la période pendant laquelle un équipement joue le rôle d'émetteur ou de récepteur est contrôlée par la distribution de probabilité.

Le document W02004100590 décrit un système de communication mobile qui détermine sur la base d'un nombre d'équipements mobiles l'établissement d'une communication soit du type point-multipoints, soit du type point à point pour la transmission de données multimédia. Certains équipements sont en état de veille tandis que d'autres maintiennent une connexion active contrôlée par le système. Ce dernier diffuse un message de contrôle comprenant un facteur de probabilité d'accès afin d'éviter de surcharger le système avec des réponses au message de contrôle. Les équipements connectés ignorent le message et ceux en état de veille répondent en fonction du facteur de probabilité d'accès. Le système compare le nombre de réponses reçues avec un seuil et détermine le type de connexion à établir, à savoir point-multipoints ou point à point. Le système peut en outre adapter le facteur de probabilité d'accès en fonction du nombre de réponses.

Les solutions décrites ci-dessus s'adaptent à des réseaux de communications où le nombre d'utilisateurs désirant accéder à un fournisseur de services est limité à quelques dizaines voire centaines. Par contre, lorsque ce nombre atteint le million, ces solutions ne permettent pas de résoudre de manière satisfaisante le problème de surcharge du centre de gestion ou du serveur central. De plus, certaines unités appartenant au réseau peuvent être hors service au moment où ils auraient dû se connecter pour leur mise à jour par exemple.

### Description de l'invention

Le but de la présente invention est de contrôler la charge des messages de requêtes transmis à un centre de gestion afin d'éviter sa surcharge ou du moins atténuer les pics de charge. Ces derniers se présentent lorsque le nombre d'unités cherchant à se connecter dans un même intervalle de temps devient important.

Ce but est atteint par une méthode de répartition de la charge d'un centre de gestion transmettant des informations à un grand nombre d'unités d'utilisateurs formant un réseau contrôlé par le centre de gestion, chaque unité du réseau recevant les informations suite à une requête effectuée en se connectant au centre de gestion, caractérisée par les étapes suivantes:
a) détermination par le centre de gestion d'un nombre d'unités à traiter avec lesdites informations pendant une durée déterminée,
b) détermination d'une probabilité de connexion au centre de gestion d'une unité parmi les unités du réseau contrôlé par le centre de gestion afin de traiter le nombre d'unités précédemment déterminé pendant la durée déterminée,
c) transmission à chaque unité du réseau contrôlé par le centre de gestion d'un message comprenant d'une part la probabilité determinée à l'étape b), de connexion au centre de gestion et d'autre part la durée déterminée de l'étape a),
d) réception par une unité, du message transmis par le centre de gestion, génération d'un premier nombre aléatoire et comparaison dudit premier nombre aléatoire avec la probabilité de connexion incluse dans le message,
e) lorsque ledit premier nombre aléatoire est inférieur à la probabilité de connexion, génération d'un second nombre aléatoire définissant un instant auquel l'unité se connecte au centre de gestion, ledit instant étant compris dans la durée déterminée de l'étape a) incluse dans le message reçu.

Le message est destiné à chaque unité du réseau contrôlé par le centre de gestion. A la réception du message, chaque unité génère un nombre aléatoire et le compare à la probabilité reçue. Si ce nombre est inférieur à la probabilité, l'unité a le droit de se connecter au centre de gestion. Elle génère ensuite un autre nombre aléatoire pour déterminer l'instant auquel elle se connecte, cet instant étant compris dans la durée incluse dans le message reçu. Lorsque ce nombre est supérieur à la probabilité, l'unité ne pourra pas se connecter et devra attendre un nouveau message à la suite duquel un nouveau nombre aléatoire sera généré permettant ou non une connexion. Le processus de transmission et de réception du message est répété à la fin de chaque durée déterminée afin de traiter toutes les unités du réseau pendant une période donnée. A chaque processus ou après un certain nombre de répétions du processus, la probabilité de connexion est augmentée du fait que les unités traitées précédemment et répertoriées par le centre de gestion ne sont plus comptées.

Comme les unités se connectent à des moments déterminés de manière aléatoire par le centre de gestion et non plus à des périodes fixes, les pics de charge sont supprimés, voire fortement atténués. La courbe de charge en fonction du temps devient ainsi plus uniforme.

Selon une variante, la probabilité de connexion peut être augmentée en fonction du nombre d'unités hors service. Le centre de gestion estime qu'un pourcentage constant d'unités ne se connectera pas dans une période donnée car elles sont soit déclenchées, soit défectueuses. Lors de la détermination du nombre d'unité à traiter, le centre de gestion tient compte de ce facteur pour augmenter la probabilité de connexion qu'il transmettra dans le message aux unités du réseau. Cette augmentation est calculée de manière à maintenir un nombre fixe d'unités qui se connectent pendant la durée définie.

Selon une autre variante, la probabilité peut aussi être adaptée en fonction de l'heure sachant que le nombre d'unités en service est plus grand le soir et la nuit que pendant la journée par exemple.

Dans l'application de la télévision numérique à péage, les unités en question sont des décodeurs d'abonnés qui se connectent périodiquement au centre de gestion de l'opérateur pour effectuer une mise à jour des droits de réception des programmes télévisés.

Par exemple, le nombre de décodeurs d'un réseau contrôlé par un centre de gestion se monte à 1 million. Le centre définit un nombre de décodeurs à traiter soit 1000 pendant une durée de une minute, ce taux dépendant de la capacité de traitement du serveur ou de sa charge admissible pendant une période donnée. La probabilité de connexion pendant une minute est donc de 1/1000. Le message transmis aux décodeurs contiendra donc cette probabilité de 1/1000 et la durée de une minute.

Selon une réalisation préférée, les données de probabilité et de durée sont incluses dans un message de contrôle ECM (Entitlement Control Message) qui est transmis régulièrement à tous les décodeurs et permettant la décryption des programmes diffusés.

A la réception du message ECM, le décodeur génère un nombre aléatoire compris entre 0 et 1, et si celui-ci est inférieur à la probabilité, le décodeur génère un autre nombre aléatoire définissant l'instant de connexion dans l'intervalle d'une minute ou le temps d'attente avant la connexion. Le centre de gestion transmet ce message toutes les minutes afin que tous les décodeurs actifs puissent se connecter. Ces connections sont comptabilisées par le centre de gestion afin d'accroître la probabilité de connexion en fonction du nombre de décodeurs mis à jour. Sur 1 million de décodeurs, la probabilité peut évoluer de 1/1000, par exemple vers 1/900, 1/800, 1/700, etc. Si l'on tient compte d'un taux de décodeurs actifs de 80%, la probabilité initiale peut être augmentée à 1/800.

Lorsque le nombre de décodeurs actifs augmente pendant la nuit par exemple, la probabilité initiale sera fixée à une valeur inférieure par exemple 1/2000, afin d'éviter un nombre excessif de connexions pendant une période donnée, 1 minute, entraînant une surcharge du serveur.

Selon une variante le centre de gestion n'évalue pas le nombre de décodeurs actifs capable de recevoir des messages. Il transmet dans une première étape des messages avec une faible probabilité de connexion correspondant à une capacité de traitement inférieure à la capacité nominale du serveur. Puis lors des étapes ultérieures, cette probabilité est augmentée en fonction des connections effectuées avec succès de manière à atteindre la capacité effective du serveur ou une charge prédéfinie de ce dernier.

Selon une autre variante la probabilité de connexion peut être régulée en fonction du nombre de décodeurs actifs et de la capacité du serveur avec une boucle de rétro - action. Lorsque le nombre de connexions devient trop important ou dépasse un seuil donné, un message d'alerte est envoyé par le serveur du centre de gestion au générateur des messages de contrôle ECM afin de réduire la probabilité de connexion. Dans le cas contraire, lorsque le nombre de connexion diminue ou est inférieur à une valeur donnée, un autre message d'alerte entraîne une augmentation de cette probabilité transmise par les messages ECM.

D'une manière générale, il est à noter que la probabilité de connexion est adaptée de manière à maintenir la valeur du taux de charge de traitement du serveur selon une valeur définie par le serveur quel que soit le nombre de décodeurs actifs connectés au réseau.

## Revendications

1. Méthode de répartition de la charge d'un centre de gestion transmettant des informations à un grand nombre d'unités d'utilisateurs formant un réseau controlé par le centre de gestion, chaque unité du réseau recevant les informations suite à une requête effectuée en se connectant au centre de gestion, **caractérisée par** les étapes suivantes:
a) détermination par le centre de gestion d'un nombre d'unités à traiter avec lesdites informations pendant une durée déterminée,
b) détermination d'une probabilité de connexion au centre de gestion d'une unité parmi les unités du réseau contrôlé par le centre de gestion afin de traiter le nombre d'unités précédemment déterminé pendant la durée déterminée,
c) transmission à chaque unité du réseau contrôlé par le centre de gestion d'un message comprenant d'une part la probabilité déterminée à l'étape b), de connexion au centre de gestion et d'autre part la durée déterminée de l'étape a),
d) réception par une unité, du message transmis par le centre de gestion, génération d'un premier nombre aléatoire et comparaison dudit premier nombre aléatoire avec la probabilité de connexion incluse dans le message,
e) lorsque ledit premier nombre aléatoire est inférieur à la probabilité de connexion, génération d'un second nombre aléatoire définissant un instant auquel l'unité se connecte au centre de gestion, ledit instant étant compris dans la durée déterminée de l'étape a) incluse dans le message reçu.

2. Méthode selon la revendication 1 **caractérisée en ce que** lorsque le premier nombre aléatoire est supérieur à la probabilité de connexion, l'unité attend, après la durée déterminée à l'étape a), un nouveau message transmis par le centre de gestion.

3. Méthode selon la revendication 1 **caractérisée en ce que** la probabilité de connexion est augmentée en fonction du nombre d'unités ayant été connectées avec succès, le centre de gestion répertoriant les connexions effectuées.

4. Méthode selon la revendication 1 **caractérisée en ce que** le nombre d'unités à traiter pendant la durée déterminée à l'étape a) dépend de la capacité de traitement d'un serveur du centre de gestion ou de la charge admissible par le serveur pendant une période donnée.

5. Méthode selon la revendication 1 **caractérisée en ce que** la probabilité de connexion est déterminée en fonction du nombre d'unités actives capables de se connecter au centre de gestion, les unités restantes étant hors service.

6. Méthode selon la revendication 5 **caractérisée en ce que** la probabilité de connexion est augmentée lorsque le nombre d'unités hors service augmente.

7. Méthode selon la revendication 4 **caractérisée en ce que** la probabilité de connexion est déterminée dans une première étape selon une capacité de traitement inférieure à la capacité nominale du serveur et augmentée en fonction des connections effectuées avec succès de manière à atteindre la capacité effective du serveur ou une charge prédéfinie dudit serveur.

8. Méthode selon la revendication 1 **caractérisée en ce que** la probabilité de connexion est régulée en fonction du nombre d'unités actives et de la capacité du centre de gestion.

9. Méthode selon la revendication 8 **caractérisée en ce que** lorsque le nombre de connexions dépasse un seuil donné, un message d'alerte est envoyé par le centre de gestion à un générateur de messages entraînant la réduction de la probabilité de connexion.

10. Méthode selon la revendication 8 **caractérisée en ce que** lorsque le nombre de connexions est inférieur à une valeur donnée un message d'alerte est envoyé par le centre de gestion à un générateur de messages entraînant l'accroissement de la probabilité de connexion.

11. Méthode selon la revendication 1 **caractérisée en ce que** les unités consistent en des décodeurs de télévision à péage connectés à un serveur du centre de gestion, lesdits décodeurs transmettant au serveur des requêtes de mise à jour des droits d'accès à des programmes diffusés, ledit serveur transmettant un message de contrôle ECM aux décodeurs comprenant une probabilité de connexion et une durée pendant laquelle un décodeur actif se connecte, pour effectuer sa mise à jour, selon la probabilité reçue.

## Claims

1. Method for distribution of the load of a managing center transmitting information to a great number of user units forming a network controlled by the managing center, each unit of the network receiving information after a request carried out while connecting to the managing center **characterized by** the following steps:
a) determining, by the managing center, a number of units to be processed with said information during a determined time period,
b) determining a probability of connection to the managing center of a unit among the units of the network controlled by the managing center in order to process the number of units previously determined during the determined time period,
c) transmitting a message to each unit of the network controlled by the managing center, said message comprising on one hand the probability of connection to the managing center determined at step b) and on the other hand the determined time period of step a),
d) receiving by a unit the message transmitted by the managing center, generating a first random number and comparing said first random number with the probability of connection included in the message,
e) when said first random number is smaller than the probability of connection, generating a second random number defining a moment at which the unit connects to the managing center, said moment being comprised within the determined time period of step a) included in the received message.

2. Method as claimed in claim 1 **characterized in that** the unit waits a new message transmitted by the managing center after the determined time period of step a) when the first random number is greater than the probability of connection.

3. Method as claimed in claim 1, **characterized in that** the probability of connection is increased in function of the number of units having been connected successfully, the managing center recording the carried out connections.

4. Method as claimed in claim 1, **characterized in that** the number of units to be processed during the determined time period of step a) depends on the processing capacity or on the admissible load of the server during a given time period.

5. Method as claimed in claim 1, **characterized in that** the probability of connection is determined in function of the number of active units able to connect to the managing center, the remaining units being out of service.

6. Method as claimed in claim 5, **characterized in that** the probability of connection is increased in function of the number of units out of service increases.

7. Method as claimed in claim 4, **characterized in that** the probability of connection is determined in a first step according to a smaller processing capacity than the nominal capacity of the server and increased in function of the connections carried out successfully in order to reach the effective capacity or a predefined load of said server.

8. Method as claimed in claim 1, **characterized in that** the probability of connection is regulated in function of the number of active units and of the capacity of the server.

9. Method as claimed in claim 8, **characterized in that** a warning message is sent by a server of the managing center to a messages generator when the number of connections exceeds a given threshold, said warning message leading to the reduction of the probability of connection.

10. Method as claimed in claim 8, **characterized in that** a warning message is sent by a server of the managing center to a messages generator when the number of connections is smaller than a given value, said warning message leading to the increase of the probability of connection.

11. Method as claimed in claim 1, **characterized in that** the units consist of pay television decoders connected to a server of the managing center, said decoders transmitting to the server requests for updating access rights to broadcasted programs, said server transmitting to the decoders an entitlement control message comprising a probability of connection and a time period during which an active decoder connects for carrying out updating according to the received probability.

## Patentansprüche

1. Verfahren zum Verteilen der Belastung eines Verwaltungszentrums, das Informationen an eine große Anzahl von Nutzereinheiten übermittelt, die ein Netzwerk bilden, das durch das Verwaltungszentrum kontrolliert wird, wobei jede Netzwerkeinheit die Informationen infolge einer Anfrage erhält, die beim Verbinden mit dem Verwaltungszentrum durchgeführt wird, **gekennzeichnet durch** die folgenden Schritte:
a) Bestimmen einer Anzahl von zu handhabenden Einheiten durch das Verwaltungszentrum mit den betreffenden Informationen während einer vorbestimmten Zeitdauer,
b) Bestimmen einer Verbindungswahrscheinlichkeit zwischen dem Verwaltungszentrum und einer Einheit der Netzwerkeinheiten, die **durch** das Verwaltungszentrum kontrolliert werden, um die Anzahl von vorangehend während der vorbestimmten Zeitdauer bestimmten Anzahl an Einheiten zu verwalten,
c) Übermitteln einer Nachricht an jede **durch** das Verwaltungszentrum kontrollierte Netzwerkeinheit, die zum einen die während des Schrittes b) bestimmte Wahrscheinlichkeit der Verbindung mit der Verwaltungseinheit und zum anderen die vorbestimmte Zeitdauer des Schrittes a) enthält,
d) Empfang der **durch** das Verwaltungszentrum übermittelten Nachricht **durch** eine Einheit, Erzeugen einer ersten Zufallszahl und Vergleichen der ersten Zufallszahl mit der in der Nachricht enthaltenen Verbindungswahrscheinlichkeit,
e) falls die erste Zufallszahl kleiner als die Verbindungswahrscheinlichkeit ist, Erzeugen einer zweiten Zufallszahl, die einen Zeitpunkt definiert, bei dem sich die Einheit mit dem Verwaltungszentrum verbindet, wobei der Zeitpunkt innerhalb der vorbestimmten Zeitdauer des Schrittes a) enthalten ist, die in der empfangenen Nachricht enthalten ist.

2. Verfahren nach Anspruch 1, **dadurch gekennzeichnet, dass**, falls die erste Zufallszahl größer als die Verbindungswahrscheinlichkeit ist, die Einheit nach der vorbestimmten Zeitdauer bei dem Schritt a) eine neue Nachricht abwartet, die durch das Verwaltungszentrum übermittelt wird.

3. Verfahren nach Anspruch 1, **dadurch gekennzeichnet, dass** die Verbindungswahrscheinlichkeit in Abhängigkeit der Einheiten erhöht wird, die sich erfolgreich eingebunden haben, wobei das Verwaltungszentrum die durchgeführten Verbindungen erfasst.

4. Verfahren nach Anspruch 1, **dadurch gekennzeichnet, dass** die Anzahl der zu verwaltenden Einheiten während der vorbestimmten Zeitdauer bei dem Schritt a) von der Bearbeitungskapazität eines Servers des Verwaltungszentrums oder von der für den Server zulässigen Belastung während einer vorbestimmten Zeitdauer abhängt.

5. Verfahren nach Anspruch 1, **dadurch gekennzeichnet, dass** die Verbindungswahrscheinlichkeit in Abhängigkeit der Anzahl von aktiven Einheiten, die in der Lage waren, sich mit dem Verwaltungszentrum zu verbinden, und der Einheiten bestimmt wird, die außer Betrieb geblieben sind.

6. Verfahren nach Anspruch 5, **dadurch gekennzeichnet, dass** die Verbindungswahrscheinlichkeit erhöht wird, wenn sich die Anzahl der außer Betrieb befindlichen Einheiten erhöht.

7. Verfahren nach Anspruch 4, **dadurch gekennzeichnet, dass** die Verbindungswahrscheinlichkeit während eines ersten Schrittes entsprechend einer unterhalb der Nominalkapazität befindlichen Verwaltungskapazität bestimmt und in Abhängigkeit der erfolgreich durchgeführten Verbindungen erhöht wird, um die effektive Kapazität des Servers oder eine vorbestimmte Belastung des Servers zu erreichen.

8. Verfahren nach Anspruch 1, **dadurch gekennzeichnet, dass** die Verbindungswahrscheinlichkeit in Abhängigkeit der Anzahl der aktiven Einheiten und der Kapazität des Verwaltungszentrums eingestellt wird.

9. Verfahren nach Anspruch 8, **dadurch gekennzeichnet, dass**, falls die Anzahl der Verbindungen eine vorbestimmte Schwelle überschreitet, durch das Verwaltungszentrum eine Alarmnachricht an einen Nachrichtengenerator übermittelt wird, die eine Verringerung der Verbindungswahrscheinlichkeit nach sich zieht.

10. Verfahren nach Anspruch 8, **dadurch gekennzeichnet, dass**, falls die Anzahl an Verbindungen unterhalb eines vorbestimmten Wertes ist, durch das Verwaltungszentrum an einen Nachrichtengenerator eine Alarmnachricht geschickt wird, die ein Erhöhen der Verbindungswahrscheinlichkeit nach sich zieht.

11. Verfahren nach Anspruch 1, **dadurch gekennzeichnet, dass** die Einheiten aus Decoder für Bezahlfernsehen bestehen, die an einen Server des Verwaltungszentrums angeschlossen sind, wobei die Decoder Aktualisierungsanfragen von Zugangsrechten zu ausgesendeten Programmen übermitteln, wobei der Server eine ECM-Kontrollnachricht an die Decoder übermittelt, die eine Verbindungswahrscheinlichkeit und eine Zeitdauer enthält, während der sich ein aktiver Decoder verbindet, um entsprechend der empfangenen Wahrscheinlichkeit seine Aktualisierung durchzuführen.
